(19) Europäisches Patentamt
European Patent Office
Office européen des brevets

(11) **EP 4 200 720 B1**

(12) **EUROPEAN PATENT SPECIFICATION**

(45) Date of publication and mention
of the grant of the patent:
**27.05.2026 Bulletin 2026/22**

(21) Application number: **20966407.7**

(22) Date of filing: **23.12.2020**

(51) International Patent Classification (IPC):
**G06F 16/901** (2019.01)

(52) Cooperative Patent Classification (CPC):
**G06N 3/006; G06N 3/044; G06N 3/0442;
G06N 3/045; G06N 3/0464; G06N 3/08;
G06N 3/0895; G06N 3/092;** G06N 3/0475

(86) International application number:
**PCT/CN2020/138724**

(87) International publication number:
**WO 2022/133832 (30.06.2022 Gazette 2022/26)**

(54) **APPARATUS AND METHOD FOR PREDICTIVE COMPUTER MODELLING**

VORRICHTUNG UND VERFAHREN ZUR PRÄDIKTIVEN COMPUTERMODELLIERUNG

APPAREIL ET PROCÉDÉ DE MODÉLISATION INFORMATIQUE PRÉDICTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(73) Proprietor: **Huawei Technologies Co., Ltd.
Shenzhen, Guangdong 518129 (CN)**

(72) Inventors:
• **LI, Minne**
**Shenzhen, Guangdong 518129 (CN)**
• **YANG, Mengyue**
**Shenzhen, Guangdong 518129 (CN)**
• **LIU, Furui**
**Shenzhen, Guangdong 518129 (CN)**
• **CHEN, Xu**
**Shenzhen, Guangdong 518129 (CN)**
• **CHEN, Zhitang**
**Shenzhen, Guangdong 518129 (CN)**
• **WANG, Jun**
**Shenzhen, Guangdong 518129 (CN)**

(74) Representative: **Grünecker Patent- und
Rechtsanwälte
PartG mbB
Leopoldstraße 4
80802 München (DE)**

(56) References cited:
CN-A- 109 754 113      CN-A- 111 563 706
US-A1- 2019 384 790

• FABIEN BARADEL ET AL: "CoPhy:
Counterfactual Learning of Physical Dynamics",
ARXIV.ORG, CORNELL UNIVERSITY LIBRARY,
201 OLIN LIBRARY CORNELL UNIVERSITY
ITHACA, NY 14853, 26 September 2019
(2019-09-26), XP081636693
• DANIJAR HAFNER ET AL: "Learning Latent
Dynamics for Planning from Pixels", ARXIV.ORG,
CORNELL UNIVERSITY LIBRARY, 201 OLIN
LIBRARY CORNELL UNIVERSITY ITHACA, NY
14853, 12 November 2018 (2018-11-12),
XP081368610
• SHAHROKH PARAVARZAR ET AL: "Motion
Prediction on Self-driving Cars: A Review",
ARXIV.ORG, CORNELL UNIVERSITY LIBRARY,
201 OLIN LIBRARY CORNELL UNIVERSITY
ITHACA, NY 14853, 7 November 2020
(2020-11-07), XP081808527
• LU CHAOCHAO ET AL: "Deconfounding
Reinforcement Learning in Observational
Settings", 26 December 2018 (2018-12-26),
XP093073349, Retrieved from the Internet
<URL:https://arxiv.org/pdf/1812.10576.pdf>
[retrieved on 20230814], DOI: 10.48550/
arxiv.1812.10576

EP 4 200 720 B1

- **MINNE LI ET AL: "Causal World Models by Unsupervised Deconfounding of Physical Dynamics", ARXIV.ORG, CORNELL UNIVERSITY LIBRARY, 201 OLIN LIBRARY CORNELL UNIVERSITY ITHACA, NY 14853, 28 December 2020 (2020-12-28), XP081847547**

**Description**

**FIELD OF THE INVENTION**

This invention relates to the creation of learnable world models for exploitation by machine intelligent agents.

**BACKGROUND**

The task in observational discovery of causal effects in physical reality is usually concerned with predicting the effect of various types of interventions, including physical laws underneath the environment (inertia, velocity, gravity or friction), the actions executed by the agent itself , and the outcome of other agents' decision in multi-agent systems. While causal reasoning has gained mainstream attention in the machine learning field recently, the current literature mostly focuses on discovering the causal effect between variables in static environments. Extensive research has also been conducted on visual reasoning in static environments. Although previous work has considered deconfounding in the reinforcement learning scenario, their assumption only covers the confounding between the observations, actions and rewards.

Understanding intuitive physics from visual perception has attracted considerable attention in machine learning and reinforcement learning society. Many of the existing models require supervised modelling of the object definition, by either comparing the activation spectrum generated from neural network filters with existing types or leveraging the bounding boxes generated by standard object detection algorithms in computer vision. Although previous work has used the relational mechanism to discover and reason about relevant entities, their model needs additional supervision to label entities with location information. On the contrary, CWMs use a fully unsupervised manner to extract object abstractions. Another existing approach considers counterfactual scenario in learning physical dynamics. However, this approach used direct supervision of the object positions, and thus only performed counterfactual forecasting in low-dimensional settings.

A variety of object-based World Models (WMs) have been proposed thanks to recent works studying the problem of object discovery from visual data. By exploiting WMs' ability to think and plan ahead, model-based reinforcement learning algorithms have been shown to be more effective than model-free alternatives in certain tasks. However, these models are often bottlenecked by the credit-assignment problem: they typically optimize a prediction or reconstruction objective function in pixel space and thereby could ignore visually small but informative features for predicting the future (such as, for instance, a bullet in an Atari game). On the contrary, CWMs learn a set of object-centric abstract state variables and model the transition using graph neural networks by optimizing an energy-based hinge loss in the latent space directly.

Counterfactual Risk Minimization (CRM) is an instance of causal inference closely related to off-policy evaluation. Because the distribution of factual and counterfactual are not fully consistent, causal models built upon historical data will produce bias. Existing work has therefore considered unbiased learning by inverse propensity scores (IPS) methods. Most existing literature focuses on the scenarios of binary or limited discrete interventions, including the popular doubly robust frameworks. In order to solve the problems of zero propensity scores on continuous intervention setting, Kallus and Zhou used kernel functions to achieve a smooth policy learning process, while Swaminathan and Joachims regularized the empirical risk via variance penalization.

It is desirable to develop a framework which predicts counterfactual scenarios and possible outcomes.

F. Baradel et al., in a paper entitled "CoPhy. Counterfactual Learning of Physical Dynamics", Online Library Cornell University Ithaca, NY, 14853, 26 September 2019, teach a model for performing counterfactual learning of physical dynamics wherein the model, in particular, is trained in graph space based on a binary cross entropy loss function.

**SUMMARY OF THE INVENTION**

According to one aspect there is provided a system for autonomous driving, comprising

a vehicle;

an apparatus for generating a predictive model of a real-world environment in which a plurality of vehicles change state, the apparatus comprising one or more processors configured to:

receive state information representing one or more changes in state of a plurality of training vehicles over respective periods of time;

train a neural network to estimate for each training vehicle, in dependence on a series of states of the training vehicle over a period of time as defined by the state information, a variant factor (u), the variant factor (u) being the last hidden state of the neural network and estimated by repeatedly optimising for a loss function between (i) an observed state of the training vehicle at a given time in the real world as defined by the state information and (ii) an imagined state of the training vehicle as estimated for the given time in a dream world by a first model in dependence on a state of the training vehicle as defined by the state information for a time prior to the given time; and

store the variant factor (u);

and wherein the apparatus comprises an upload device configured to store the variant factor (u) in the vehicle;

and wherein

the vehicle comprises one or more sensors and one or more processors capable of implementing the variant factor so as to predict, in dependence on state information sensed by the one or more sensors representing the state of a plurality of vehicles, future states of the vehicles.

The neural network may be a recurrent neural network having a gated recurrent unit ($f_\phi$) for each series of states ($s_k^{0:T}$) of each training object ($k$) and the apparatus may be configured to adopt the last hidden state ($h_k^T = f_\phi(s_k^{0:T})$) of the neural network as the variant factor for that object.

The apparatus may be configured to implement the neural network as a graph neural network configured to predict for a series of initial object states ($s_{1:K}^t$) for each of a set of objects at a given time (t) a series of future states ($\Delta s_{1:K}^t$) for each of the set of objects.

The loss function may be defined such as to score positive and negative samples differently.

The loss function may be defined so that the loss ($\mathcal{L}$) is computed consistently with $\mathcal{L} = \mathcal{H} + \max(0, \gamma - \widetilde{\mathcal{H}})$, where $y$ is a hyperparameter, $\mathcal{H}$ is an energy corresponding to two consecutive states and $\widetilde{\mathcal{H}}$ is an energy corresponding to a negative sample.

The or each processor may be configured to: receive further state information (real world / o) representing the state of a plurality of live objects; and estimate future states (dream world / $f_{trans}(|\bar{s}^t:\hat{u}|)_k$) of the live objects in dependence on the first model and the variant factor.

The or each processor may be configured to: form an intermediate estimate (s) of the future states by means of the first model; and estimate the future states by varying the intermediate estimate in dependence on the variant factor. The training objects and/or the live objects may be vehicles.

The or each processor may be configured to: receive state information representing the state of a plurality of objects; estimate future states of the objects in dependence on the first model and the variant factor; and train a further neural network model to predict, in dependence on the received state information, the estimated future states of the objects.

The upload device may be configured to store the further neural network model in the vehicle, and the one or more processors may be capable of implementing the further neural network model so as to predict, in dependence on state information sensed by the one or more sensors representing the state of a plurality of vehicles, future states of the vehicles.

In another aspect there is provided a computer-implemented method for autonomous driving of a vehicle comprising generating a predictive model of a real-world environment in which a plurality of vehicles change state, the method comprising:

receiving state information representing one or more changes in state of a plurality of training vehicles over respective periods of time;

training a neural network to estimate for each training vehicle, in dependence on a series of states of the training vehicle over a period of time as defined by the state information, a variant factor (u), the variant factor (u) being the last hidden of the neural network estimated by repeatedly optimising for a loss function between (i) an observed state of the training vehicle at a given time in the real world as defined by the state information and (ii) an imagined state of the training vehicle as estimated for the given time in a dream world by a first model in dependence on a state of the training vehicle as defined by the state information for a time prior to the given time;

storing the variant factor (u) in the vehicle;

sensing state information by one or more sensors of the vehicle;

implementing the variant factor (u) by one or more processors of the vehicle so as to predict, in dependence on the state information sensed by the one or more sensors representing the state of a plurality of vehicles, future states of the vehicles.

**BRIEF DESCRIPTION OF THE FIGURES**

The present invention will now be described by way of example with reference to the accompanying drawings. In the drawings:

Figure 1a illustrates a typical transition model from the conventional WMs;

Figure 1b and 1c show the typical transition model with the addition of confounding factors u;

Figure 2a shows a graphical model of world models;

Figure 2b shows a graphical model of causal world models;

Figure 2c shows a graphical model of the proposed causal world models after do-operation; and

Figure 3 illustrates the proposed Causal World Models in greater detail, showing the three main parts of the proposed approach: the Object Extractor and Encoder, the Transition Estimator, and the Confounder Estimator.

**DETAILED DESCRIPTION OF THE INVENTION**

The capability of imagining internally with a mental model of the world is vitally important for human cognition. If a machine intelligent agent can learn a world model to create a "dream" environment, it can then internally ask what-if questions - simulate the alternative futures that haven't been experienced in the past yet - and make optimal decisions accordingly. Existing world models are established typically by learning spatio-temporal regularities embedded from the past sensory signal without taking into account confounding factors that influence state transition dynamics. As such, they fail to answer the critical counterfactual questions about "what would have happened" if a certain action policy was taken. The proposed approach uses Causal World Models (CWMs) that allow unsupervised modelling of relationships between the intervened observations and the alternative futures by learning an estimator of the latent confounding factors. The proposed approach results in reductions in sample complexity for reinforcement learning tasks and improvements in counterfactual physical reasoning.

Human-level intelligence relies on building up the capability of simulating the physical world in order to create human-like thinking, reasoning, and decision making abilities. This mechanism has served as a core motivation behind several recent works of learning world models (WMs) that aim at predicting future sensory data given the agent's current motor actions. One of the ultimate goals of WMs is creating the dream, where the agent can internally simulate the alternative futures not encountered in the real world. This, however, requires WMs to predict the reasonable outcome of various types of interventions to the observation. Herein below, there is discussed ways of building WMs capable of creating the dream environment to predict the counterfacts that would have happened.

Conventional world models usually aim at learning spatio-temporal regularities from the past data and thereby predict future frames from one or several past frame(s) without considering the causal effect of the interventions. Model-based reinforcement learning (MBRL) algorithms, which learn world models (WMs) from a few examples efficiently, have been shown to be more effective than model-free alternatives thanks to its ability of thinking and planning ahead. One of the ultimate goals of WMs is creating a dream environment, where the agent can internally simulate the alternative futures not encountered in the real world. The proposed approach explores 1) building WMs incorporated with causality capable of creating the dream environment to predict the counterfacts that would have happened; and 2) applying the generated dream environment to MBRL for more accurate and efficient decision making.

Therefore, based on the methods proposed herein there is provided an apparatus for generating a predictive model of a real-world environment in which a plurality of objects change state. The apparatus comprising one or more processors configured to receive state information representing one or more changes in state of a plurality of training objects over respective periods of time and train a neural network to estimate for each training object a variant factor (u). The estimating being in dependence on a series of states of the training object over a period of time as defined by the state information. The variant factor (u) being estimated by repeatedly optimising for a loss function between (i) a first state of the training object at a given time as defined by the state information and (ii) a second state of the training object as estimated for the given time by a first model in dependence on a state of the training object as defined by the state information for a time prior to the given time. The first state of the training object at the given time being the state of a real world. I.e. an observed state which is known. The second state as estimated for the given time is the state of the training object in the dream world. I.e. an imagined state which may have happened if the conditions of the real world had been different or changed.

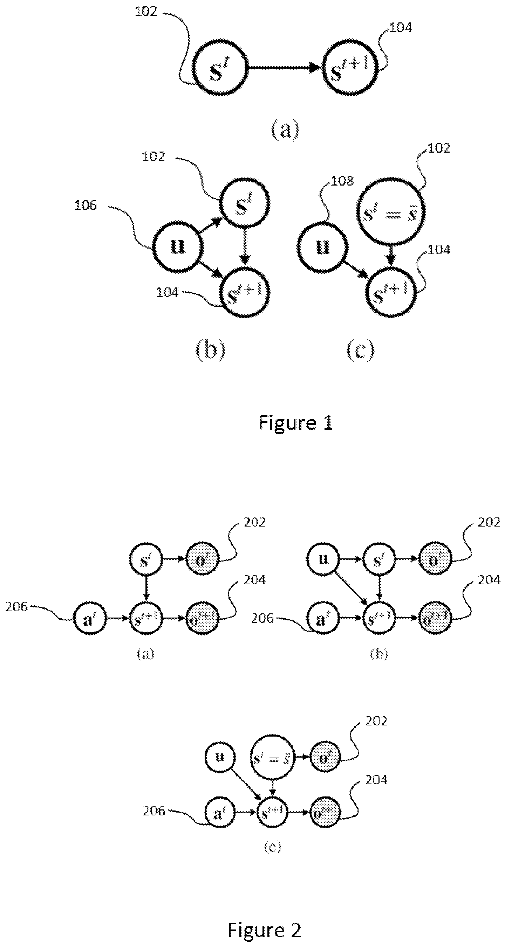

Figure 1a illustrates a typical transition model from the conventional WMs, where the focus is on the distribution of $s^{t+1}$ 104 given the observed value of the variable $s^t$ 102. This estimation will give us the observational conditional $p(s^{t+1}|s^t)$. While the forecasting from the past data is important, in WMs there is more interest in controlling the state $s^t$ to create the dream environment and facilitate imagination. In other words, it is intended to know what the scenario $s^{t+1}$ would have been if the world state $s^t$ was set to a specific value $\bar{s}$ by adopting a do-operator $do(s^t = \bar{s})$ from causal reasoning, i.e., the interventional conditional $p(s^{t+1}|do(s^t = \bar{s}))$.

In most real-world cases, those two quantities, the observational conditional and the interventional conditional are different because of the existence of confounding factors. Figure 1b and 1c illustrate the same transition model as in Figure 1a, but with the addition of these confounding factors. Confounders, denoted as u 106, are hidden variables that influence both the intervention $s^t$, and the outcome $s^{t+1}$. Figure 1a illustrates the existing problem definition as used by conventional world models. Figure 1b shows how the proposed approach considers the problem by explicitly adding a confounding factor u. The world models following the problem definition as shown in Figure 1b are thus referred to as causal world models, CWMs. Figure 1c shows how these CWMs are solved by adopting the do-operation.

To illustrate the impact, there are provided below some simple calculations for the observational conditional

$$p(s^{t+1}|s^t) = \int_u p(s^{t+1}|u,s^t)p(u|s^t)du = \int_u p(s^{t+1}|u,s^t)\frac{p(s^t|u)}{p(s^t)}p(u)du,$$

and the interventional conditional after do-operator 108, as shown in Figure 1c, is factorized

$$p(s^{t+1}|do\ (s^t = \bar{s})) = \int_u p(s^{t+1}|u,s^t = \bar{s})p(u)du$$

Clearly the above two are not the same due to the influence of the confounders $u:p(s^t|u)$. This result is also termed as the Simpson's paradox, a classical example for the existence of confounding in medical treatment scenarios which is explained in more detail below.

The above observations therefore encourage building the world model following the transition graph in Figure 1b, which enables the world model to disentangle the true effect of an intervention on the observation. The proposed approach introduces the Causal World Models or CWMs to predict the effect of interventions that would have happened, i.e., the desire is to predict consequent observation trajectories as if the initial observation had been changed by performing a do-intervention, which is defined as an object-level observable change applied to the initial observation.

CWMs aim at modelling relationships between the variable on which the intervention is performed and the variable whose alternative future should be predicted. The proposed model starts from learning a set of abstract state variables for each object in a particular observation and model the transition using graph neural networks that operate on latent abstract representations. The proposed approach then develops CWMs by estimating the latent representation of the confounders, i.e., a set of static but visually unobservable quantities that could otherwise affect the observation. In the proposed method, the deconfounding process could be understood as an extension on conventional World Models. Deconfounding methods help to build time-invariant function beyond transition functions, which gives a more precise description of environments since this mechanism could preserve global information, e.g. gravity acceleration in physical system, from time variations. The alternative future is then predicted given the altered past and the estimation of confounders. To further reduce the intrinsic bias owing to the inadequate counterfactual records, there is also proposed a counterfactual risk minimization method from historical observations for CWMs.

The proposed model adopts counterfactual learning to mitigate the problem of biased historical data. Instead of measuring the causal effect of the intervention in a discrete event space, the focus is on the intervention distribution in continuous space. While still different from existing approaches, the propensity weight in the proposed method is not decided by the environments state but by the historical sampling strategies.

The environment is defined as a partially observable Markov Decision Process (POMDP) represented by the tuple $\Gamma = \langle \mathcal{S}, \mathcal{A}, \mathcal{O}, \mathcal{U}, \mathcal{T}, \mathcal{R}, T\rangle$, where $\mathcal{S}, \mathcal{A}, \mathcal{O}, T$ are the state space, the action space, the observation space, and the horizon, respectively. For an agent taking actions in this environment, the variable representing its received observation at time step $t$ is designated by $o^t$, and the real-world observed values by

$$o^t \in \mathcal{O} \equiv \mathbb{R}^D.$$

At each time step $t$, $s^t$ is used to denote the variable representing the abstract state of the world and

$$s^t \in \mathcal{S} \equiv \mathbb{R}^d$$

the real-world value of this variable. $s^t$ can be typically regarded as the latent static component of the world to render the observation, e.g., the shape, size and color of the objects. The observation $o^t$ are provided by the environment following the observation distribution $\mathcal{U}(o^t|s^t): \mathcal{S} \to \mathcal{O}$. When the environment receives an action at $a^t \in \mathcal{A}$, executed by the agent, it moves to a new state $s^{t+1}$ following the transition distribution $\mathcal{T}(s^{t+1}|s^t, a^t): \mathcal{S} \times \mathcal{A} \to \mathcal{S}$ and returns a reward $r^t$ according to $\mathcal{R}(r^t|s^t, a^t): \mathcal{S} \times \mathcal{A} \to \mathrm{R}$.

To create the dream world the do-operator or do-intervention $do\,(s^t = \bar{s}^t)$ is applied on the abstract state variable as shown in Figure 1c, where

$$\bar{s}^t \in \mathcal{S} \equiv \mathbb{R}^d$$

is the counterfactual value in the dream environment. The intervened abstract state is then rendered as an object-level observable change applied to $o^t$ (such as, for instance, object displacement or removal), by the conditional observation distribution $\mathcal{U}(o^r = \bar{o}^t|do(s^t = \bar{s}^t))$, where $\bar{o}^t \in \mathcal{O} \equiv \mathbb{R}^D$ represents the value of the counterfactual observation. Learning the causal world models aims to answer the question:

Given that we have observed $o^{t:T} = o^{t:T}$ in the real world, what is the probability that $o^{t+1:T}$ would have been $\bar{o}^{t+1:T}$ if $o^t$ were $\bar{o}^t$ in the dream world?

Particularly, having observed the tuple $(o^{t:T}, \bar{o}^t)$, there is a desire to predict positions and poses of all objects in the scene at time $t = T'$. An off-policy setting is considered for the model training, which operates solely on a buffer of offline experience obtained from an exploration policy. In the proposed approach described herein the focus is on building an internal dream environment to simulate the future not encountered in the past with any given dream policy $p(a^t|s^t)$. Therefore, the action variable is dropped from the notation in the remainder of this description by

$$\int_{a^t} \mathcal{T}\,(s^{t+1}|s^t, a^t)p(a^t|s^t)da^t = \int_{a^t} \mathcal{T}(s^{t+1}|a^t, s^t)\,da^t = \mathcal{T}(s^{t+1}|s^t).$$

Instead of recovering the individual treatment effect (ITE), which measures the causal effect when the intervention happens in a discrete event space, the focus of the proposed approach is on the identification of the intervention distributions $p(o^{t+1:T'}|do(s^t = \bar{s}^t))$ and $p(o^t|do(s^t = \bar{s}^t))$ in the continuous space.

Definition 1. A variable $\mathbf{u}$ factorizes the distribution of variable $s^t$ iff: $p(s^t) = \int_u p(s^t|\mathbf{u} = u)p(\mathbf{u} = u)du$.

Assumption 1. There exists an unobserved variable u such that (i) $\mathbf{u}$ blocks all backdoor *path2* from $s^t$ to $s^{t+1}$ and (ii) there exist no backdoor path from the abstract state $s^t$ to the observation $o^t$.

Theorem 1. Under Assumption 1, if there exists an estimator of $\mathbf{u}$, $\hat{u}(s^t)$, such that $\widehat{\mathbf{u}}(s^t) \xrightarrow{a.s} \boldsymbol{u}$ , then the intervention distributions $p(o^{t+1:T'}|do(s^t = \bar{s}^t))$ and $p(o^t|do(s^t = \bar{s}^t))$ are identifiable.

Proof. By applying do-calculus to the causal graph in Figure 1b as shown in Figure 1c, referred to as back-door criterion, the intervention distributions are then identified by

$$p(o^t|do(s^t = \bar{s}^t)) = p(o^t|s^t = \bar{s}^t),$$

$$p(o^{t+1:T'}\left|do(s^t = \bar{s}^t)\right) = \int_u p(o^{t+1:T'}|s^{t+1:T'})p(s^{t+1:T'}\left|s^t = \bar{s}^t, \widehat{\boldsymbol{u}}(s^t) = u)p(\widehat{\boldsymbol{u}}(s^t) = u)d\boldsymbol{u} \quad (1)$$

This completes the proof since the quantities in the final expression of Equation 1 can be identified from the observed distribution $p(o^{t:T})$ and $p(\bar{o}^t)$ and the estimator $\hat{u}(s^t)$.

$\mathbf{u}$ is considered as the confounder as described above. That is, $\mathbf{u}$ is considered as a set of static but visually unobservable quantities such as object masses, friction coefficients, direction and magnitude of gravitational forces. CWMs are developed by learning $\hat{u}$ to estimate the latent representation of $\mathbf{u}$. The dream rollout $\bar{o}^{t+1:T'}$ is then predicted given $\bar{o}^t$ and $\hat{u}$ following Equation 1.

Figures 2a-c show a graphical model of WMs, CWMs, and CWMs after do-operation similar to those shown in Figures 1a-c. That is, Figures 2a-c are the corresponding extensions of 1a-c when considering the environment as the partially observable Markov Decision Process (POMDP), which includes the action variable $a^t$ 206 and the observation variable $o^t$ 202. Figures 1a-c should therefore be regarded as showing models which are a part of the models shown in Figures 2a-c respectively. However, the main focus of the proposed approach is the transition function as shown in the models of Figures 1a-c. The learning of the other arrows in the models of Figures 2a-c which are additional to those in the models of Figures 1a-c, is not the focus of this proposed approach.

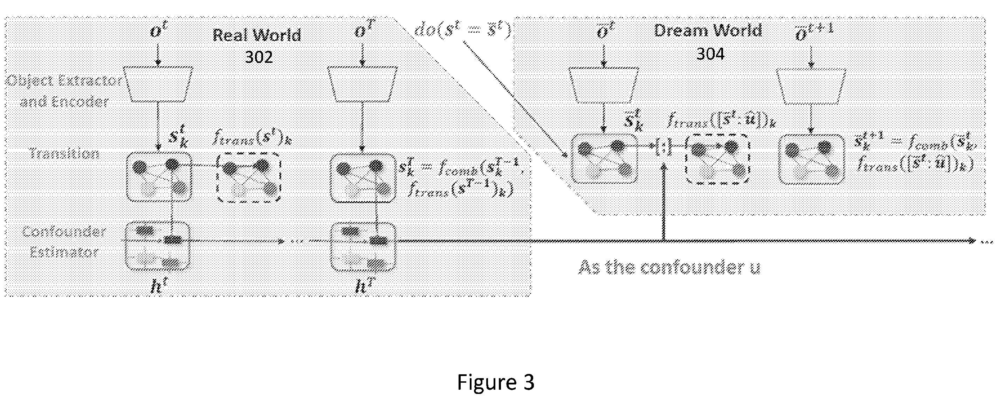

Figure 3 illustrates the proposed Causal World Models. Specifically, Figure 3 shows the three main parts of the proposed approach: the Object Extractor and Encoder, the Transition Estimator, and the Confounder Estimator. The Object Extractor and Encoder steps are illustrated along the top row of Figure 3 for both the Real World in the left-hand box 302 and for the Dream World in the right-hand box 304. The Transition Estimator steps are illustrated on the middle row of Figure 3 for both the Real World in the left-hand box 302 and the Dream World in the right-hand box 304. The implementation of the Object Extractor and Encoder and Transition Estimator will now be described in more detail.

The starting point for the model design is learning a set of object-oriented state abstractions and modelling the transition using graph neural networks, which facilitates capturing the structural property of the physical system and tackles the credit-assignment problem faced by most conventional generative WMs. To further improve the discrepancy between state abstractions, the training of CWM is carried out with an energy-based hinge loss which scores positive against negative experiences in the form of transition dynamics and proposes to learn the transition dynamics in the latent space directly. Lastly, there is introduced the confounder estimator using a set of recurrent neural networks.

To avoid the credit-assignment problem introduced by generative-based world models, which optimize a prediction or reconstruction objective in pixel space and thereby could ignore visually small but informative features for predicting the future (such as, for instance, a bullet in an Atari game), the CWM learns a set of abstract state values

$$s^t \in \mathcal{S} \equiv \mathbb{R}^D$$

for each object in $o^t \in \mathcal{O}$. Formally, there is an encoder $f_{enc}: \mathcal{O} \to K \times \mathcal{S}$ which maps observation to $K$ abstract state representations. The choice of K is a hyperparameter and details on an ablation study on its influence can be found below.

A simple implementation of $f_{enc}$ consists of two modules:

1) a CNN taking $o^t$ as input with $K$ feature maps in its last layer corresponding to $K$ object slots, respectively; and

2) an MLP taking each feature map as input and producing the corresponding abstract state representation $s_k^t$ with $k \in \{1,2, ... K\}$.

It is noted that choosing other advanced unsupervised object representation learning methods for $f_{enc}$ is a possible additional option. For example, a possible choice could be the Transporter neural information processing system, which is used for learning concise geometric object representations in terms of image-space coordinates in a fully unsupervised manner.

The transition model of CWM is formulated as $f_{trans}: K \times \mathcal{S} \to K \times \mathcal{S}$ operating on abstract state representations $s^t$. In this proposed approach $f_{trans}$ is implemented as a graph neural network, which allows us to model pairwise interactions between object states while being invariant to the order in which objects are represented. The transition model $f_{trans}$ takes as input the tuple of abstract object representations $s^t = (s_1^t, ..., s_K^t)$ and predicts updates $\Delta s^t = (\Delta s_1^t, ..., \Delta s_K^t)$ which are used to obtain the next abstract state representations via a combination function $f_{comb}(.,.)$. In this implementation $f_{comb}$ is simply chosen as an addition function, i.e., $f_{comb}(s^t, f_{trans}(s^t)) = s^t + \Delta s^t$. Alternatively, one could model the combination using other graph embedding methods. The graph neural network consists of node update functions $f_{trans-node}$ and edge update functions $f_{trans-edge}$ with shared parameters across all nodes and edges. These functions are implemented as MLPs and the message passing updates are chosen as

$$\Delta s_j^t = f_{trans-node}\left([s_j^t, \sum_{i \neq j} e_{i,j}^t]\right), \text{ where } e_{i,j}^t = f_{trans-edge}([s_i^t, s_j^t])$$ is an intermediate representation of the interaction between nodes i and j. The output of the transition model for the k-th object is denoted as $\Delta s_k^t = f_{trans}(s^t)_k$ in the following description.

That is, the neural network may be a recurrent neural network having a gated recurrent unit $f_\phi$ for each series of states $s_k^{0:T}$ of each training object $k$. The above referenced apparatus may then be configured to adopt the last hidden state $h_k^T = f_\phi(s_k^{0:T})$ of the neural network as the variant factor for that object. The apparatus may be configured to implement the neural network as a graph neural network. The graph neural network being configured to predict for a series of initial object states $s_{1:K}^t$ for each of a set of objects at a given time $t$ a series of future states $\Delta s_{1:K}^t$ for each of the set of objects.

To further improve the discrepancy between state abstractions, the training of CWM may be carried out with an energy-based hinge loss, which scores positive and negative samples in a different direction. Such scoring has been widely used in the field of graph representation learning. In the proposed approach the energy of two consecutive state variables and the energy of the negative sample may be defined as

$$\mathcal{H} = \frac{1}{K}\sum_{k=1}^{K} d\big(f_{comb}(s_k^t, f_{trans}(s^t)_k), s_k^{t+1}\big), \quad \widetilde{\mathcal{H}} = \frac{1}{K}\sum_{k=1}^{K} d(\tilde{s}_k^t, s_k^{t+1}), \qquad (2)$$

where $d(.,.)$ denotes the squared Euclidean distance and $\tilde{s}^t$ denotes a corrupted abstract state encoded by $\tilde{s}^t = f_{enc}(\tilde{o}^t)$ using a random sample $\tilde{o}^t$ from the experience buffer. The objective of CWM then may take the following energy-based hinge loss form as:

$$\mathcal{L} = \mathcal{H} + \max\big(0, \gamma - \widetilde{\mathcal{H}}\big), \qquad (3)$$

where margin $\gamma$ is a hyperparameter. The overall loss is to be understood as an expectation of the above over samples from the experience buffer.

In reference to the or each processor of the above referenced apparatus, the or each processor may be configured to receive further state information, i.e. from the real world, $o$, representing the state of a plurality of live objects. The or each processor may be configured to estimate future states, i.e. of the dream world $f_{trans}(|\overline{s}^t : \hat{u}|)_k$, of the live objects in dependence on the first model and the variant factor. The or each processor may also be configured to form an intermediate estimate s of the future states by means of the first model and estimate the future states by varying the intermediate estimate in dependence on the variant factor. The training objects and/or the live objects may for example be vehicles.

The Confounder Estimator steps are illustrated along the bottom row of Figure 3 for the Real World in the left-hand box 302 which is fed into the Dream World on the right-hand side of Figure 3 as described now in more detail below.

For the deconfounding, CWM is developed by learning an estimator $\hat{u}$ to approximate the latent representation of the confounders $u_k$ for each object k. The estimator $\hat{u}$ is trained end-to-end by optimizing the counterfactual prediction loss through a recurrent neural network, which takes as input the sequence of abstract state variables $s_k^{0:T}$. Concretely, a dedicated RNN with GRU $f_\phi$ for each object trajectory $s_k^{0:T}$ is run and the last hidden state $h_k^T = f_\phi(s_k^{0:T})$ is kept as the estimate of the latent representation of the confounders, i.e., $\hat{u}_k \triangleq h_k^T \wedge uk$, hTk. The convention of sharing the parameters of $f_\phi$ over $K$ objects is followed, which makes the model invariant to the number of objects. The confounders estimation is then fed into the dream world model by concatenating with $s^t$ before the transition estimator to predict the alternative futures after do-intervention. The concatenation is shown in Figure 3 as [:].

In real-world scenarios, models trying to approximate the counterfactual distribution will be biased because of the inadequate counterfactual records. For example, in the physical dynamics scenario with continuous intervention space, historical trajectories satisfy a certain but unknown distribution which corresponds to the historical sampling policy. However, it cannot be discretely considered like propensity scores in traditional IPS function, since it may involve an unavoidable variance. To minimize counterfactual risk when training CWMs, the propensity score is chosen as the historical sampling policy of selected intervention $p(s^0)$ represented by a density function. Inspired by the doubly robust (DR) estimator, the proposed estimator is set as described below.

Definition 2. Let $p(s^0)$ denote the history observation distribution (propensity score) on $t_0$, and $O(s|t) = \delta(s = s^t)$ denote the observation indicator function, i.e. when $s = s^t$, the $O(s|t) = 1$, the Doubly Robust prediction of $s^{t+1}$ is

$$\hat{s}_{DR}^{t+1}(s^t) = \frac{O(s = s^0 | t_0)}{p(s^0)}\Big(s^{t+1} - s^t - \hat{f}_{trans}(s^t)\Big) + (s^t + \hat{f}_{trans}(s^t)) \qquad (4)$$

Proposition 1. Given the propensity score $p(s^0)$, the doubly robust oracle is unbiased against the true trajectory observation, i.e., $\mathbb{E}\big[\hat{s}_{DR}^{t+1}\big] = s^{t+1}$.

Let $s^t$ be the t-th latent state of trajectory $k$.

$$\mathbb{E}(\hat{s}_{DR}^{t+1}(s^t|s^0)) = \mathbb{E}(\frac{O(s^0|t=0)}{p(s^0)}\left(s^{t+1} - s^t - \hat{f}_{trans}(s^t)\right) + (s^t + \hat{f}_{trans}(s^t))|s^0)$$

$$= \mathbb{E}(\frac{O(s^0|t=0)}{p(s^0)}\mathbb{E}(s^{t+1} - s^t - \hat{f}_{trans}(s^t)|s^0) + \mathbb{E}(s^t + \hat{f}_{trans}(s^t))|s^0)$$

$$= s^{t+1}$$

The doubly robust objective function for CWMs is then arrived at as:

$$\mathcal{L}_{DR} = \frac{1}{K}\sum_{k=1}^{K} d\left(\hat{s}_{DR,k}^{t+1}, s_k^{t+1}\right) + max(0, \gamma - \widetilde{\mathcal{H}}), \qquad (5)$$

where y is a free parameter and $\widetilde{\mathcal{H}}$ is the energy of negative samples as described in Equation 3.

Thus, there is proposed herein Causal World Models (CWMs) to create a dream world able to predict the alternative future not encountered in the real world in a fully unsupervised manner. By learning an estimator of the latent confounders and optimizing directly within the abstract state space, CWMs outperform state-of-the-art world models in both the reinforcement learning tasks and physical simulation environments. To further reduce the inevitable bias of counterfactual dataset, there is also proposed a counterfactual risk minimization method for CWMs

Again, in reference to above mentioned apparatus, the or each processor may be configured to receive state information representing the state of a plurality of objects; estimate future states of the objects in dependence on the first model and the variant factor; and train a further neural network model to predict, in dependence on the received state information, the estimated future states of the objects.

Additionally or alternatively, the apparatus may be configured to store the variant factor and further comprising an upload device configured to store the variant factor and/or the further neural network model in each of a plurality of mobile devices. Each mobile device may have one or more sensors and one or more processors capable of implementing the variant factor and/or the further neural network model so as to predict, in dependence on state information sensed by the sensor(s) representing the state of a plurality of objects, future states of the objects. The mobile devices may be vehicles or mobile phones.

In keeping with the above described concepts a method for generating a predictive model of a real-world environment in which a plurality of objects change state is proposed. The method comprises receiving state information representing one or more changes in state of a plurality of training objects over respective periods of time. Then, training a neural network to estimate for each training object a variant factor (u) in dependence on a series of states of the training object over a period of time as defined by the state information. The variant factor (u) being estimated by repeatedly optimising for a loss function between (i) a first state of the training object at a given time as defined by the state information and (ii) a second state of the training object as estimated for the given time by a first model in dependence on a state of the training object as defined by the state information for a time prior to the given time.

The proposed CWM is a model-based trajectory prediction method integrating causal reasoning, which can help to estimate the possible future outcomes by counterfactual inference. Using the proposed method, it is possible to create simulators for complex environments, which enables in-depth analysis of the studied system, allowing intervention on objects to analyze its behaviour under the hypothetical conditions.

The proposed method is useful for offline policy evaluations on partially observable Markov Decision Process (POMDP) environments. It estimates the state transition model via a strategy considering confounding of the system. Confounders commonly exist in real-world scenarios such as sequential recommendation systems and autonomous driving, causing biased or unstable model performance if the effect of confounding is not removed. Using the proposed method, it is possible to estimate robust deconfounded simulators or systems that allow (1) unbiased policy evaluation from offline data instead of expensive online data for recommendation systems or (2) improvements in the safety of automatic driving, if applied to these scenarios.

Compared to existing approaches in the deconfounding reinforcement learning scenario, the proposed CWMs take into account the confounding factors between state transitions and can therefore internally predict the alternative futures not encountered in the past.

Further, when compared to existing approaches to understanding intuitive physics from visual perception, CWMs operate in a fully unsupervised manner to extract object abstractions, build state transition models, and estimate the latent representation of confounders.

To tackle the credit-assignment problem existed in conventional object-based World Models, CWMs learn a set of object-centric abstract state variables and model the transition using graph neural network by optimizing an energy-based hinge loss in the latent space directly.

As mentioned above, the classical example of Simpson's Paradox in the medical treatment scenario from Pearl is included to demonstrate the wide existence of confounding. Consider the example where y is the observational recovery rate and x is taking a drug as the treatment. Pearl shows that the overall recovery rate of all patients increased from 40% to 50% after the treatment, while the drug appeared to be harmful to both male (recovery rate dropped from 70% to 60%) and female patients (recovery rate dropped from 30% to 20%) respectively. Simply using the causal chain of conventional world models (WMs) will lead to the above Simpson's paradox, which refers to the phenomenon that a trend appears in several different groups of data but disappears or reverses when these groups are combined. An intuitive explanation for this phenomenon is that females are more vulnerable to the disease and are much more likely to die without the treatment, resulting in that no treatment looks worse than taking the drug overall. This intuition leads us to the assumption of the true underlying causal graph is one which takes confounding u into account as the gender affects both the treatment and recovery.

In summary, there is proposed:

1) Causal World Models (CWMs) framework, which consider the confounding factors between state transitions and can therefore internally predict the alternative futures not encountered in the past, and

2) an implementation of CWMs in physical simulation scenario to predict consequent observation trajectories as if the initial observation had changed by performing a do-intervention, which is defined as an object-level observable change applied to the initial observation.

To develop CWMs, first a world model is built incorporating causality by estimating the latent representation of the confounders, i.e., a set of static but visually unobservable quantities that could otherwise affect the observation. The alternative future in the dream environment is then predicted given the altered past and the estimation of confounders. The generated dream environment can then be applied to MBRL for more accurate and efficient decision making. To further reduce the intrinsic bias owing to the inadequate counterfactual records, there is also proposed a counterfactual risk minimization method from historical observations for CWMs.

## Claims

1. A system for autonomous driving, comprising

   a vehicle;
   an apparatus for generating a predictive model of a real-world environment in which a plurality of vehicles change state, the apparatus comprising one or more processors configured to:

      receive state information representing one or more changes in state of a plurality of training vehicles over respective periods of time;
      train a neural network to estimate for each training vehicle, in dependence on a series of states of the training vehicle over a period of time as defined by the state information, a variant factor (u), the variant factor (u) being the last hidden state of the neural network and estimated by repeatedly optimising for a loss function between (i) an observed state of the training vehicle at a given time in the real world (302) as defined by the state information and (ii) an imagined state of the training vehicle as estimated for the given time in a dream world (304 )by a first model in dependence on a state of the training vehicle as defined by the state information for a time prior to the given time; and
      store the variant factor (u);

   and wherein the apparatus comprises an upload device configured to store the variant factor (u) in the vehicle; and wherein
   the vehicle comprises one or more sensors and one or more processors capable of implementing the variant factor so as to predict, in dependence on state information sensed by the one or more sensors representing the state of a plurality of vehicles, future states of the vehicles.

2. The system as claimed in claim 1, wherein the neural network is a recurrent neural network having a gated recurrent unit ($f_\phi$) for each series of states ($s_k^{0:T}$) of each training vehicle *(k)* and the apparatus is configured to adopt the last hidden state ($h_k^T = f_\phi(s_k^{0:T})$) of the neural network as the variant factor for that training vehicle.

3. The system as claimed in claim 1 or 2, wherein the apparatus is configured to implement the neural network as a graph neural network configured to predict for a series of initial vehicle states ( $s_{1:K}^t$ ) for each of a set of vehicles at a given time (t) a series of future states ( $\Delta s_{1:K}^t$ ) for each of the set of vehicles.

4. The system as claimed in any preceding claim, wherein the loss function is defined such as to score positive and negative samples differently.

5. The system as claimed in claim 4, wherein the loss function is defined so that the loss ( $\mathcal{L}$ ) is computed consistently with $\mathcal{L} = \mathcal{H} + \max(0, y - \tilde{\mathcal{H}})$, where $y$ is a hyperparameter, $\mathcal{H}$ is an energy corresponding to two consecutive states and $\tilde{\mathcal{H}}$ is an energy corresponding to a negative sample.

6. The system as claimed in any preceding claim, wherein the or each processor is configured to:

   receive further state information (real world / $o$) representing the state of a plurality of live vehicles; and
   estimate future states (dream world / $f_{trans}(|\bar{s}^t:\hat{u}|)_k$) of the live vehicles in dependence on the first model and the variant factor.

7. The system as claimed in claim 6, wherein the or each processor is configured to:

   form an intermediate estimate (s) of the future states by means of the first model; and
   estimate the future states by varying the intermediate estimate in dependence on the variant factor.

8. The system as claimed in any preceding claim, wherein the or each processor is configured to:

   receive state information representing the state of a plurality of vehicles;
   estimate future states of the vehicles in dependence on the first model and the variant factor; and
   train a further neural network model to predict, in dependence on the received state information, the estimated future states of the vehicles.

9. The system as claimed in claim 8, wherein cc.

10. A computer-implemented method for autonomous driving of a vehicle comprising generating a predictive model of a real-world environment in which a plurality of vehicles change state, the method comprising:

    receiving state information representing one or more changes in state of a plurality of training vehicles over respective periods of time;
    training a neural network to estimate for each training vehicle, in dependence on a series of states of the training vehicle over a period of time as defined by the state information, a variant factor (u), the variant factor (u) being the last hidden state of the neural network estimated by repeatedly optimising for a loss function between (i) an observed state of the training vehicle at a given time in the real world (302) as defined by the state information and (ii) an imagined state of the training vehicle as estimated for the given time in a dream world (304) by a first model in dependence on a state of the training vehicle as defined by the state information for a time prior to the given time;
    storing the variant factor (u) in the vehicle;
    sensing state information by one or more sensors of the vehicle;
    implementing the variant factor (u) by one or more processors of the vehicle so as to predict, in dependence on the state information sensed by the one or more sensors representing the state of a plurality of vehicles, future states of the vehicles.

**Patentansprüche**

1. System für autonomes Fahren, umfassend:

   ein Fahrzeug;
   eine Einrichtung zum Erzeugen eines prädiktiven Modells einer Umgebung der realen Welt, in der eine Vielzahl von Fahrzeugen den Zustand ändert, wobei die Einrichtung einen oder mehrere Prozessoren umfasst, die dazu konfiguriert sind:

Zustandsinformationen zu empfangen, die eine oder mehrere Zustandsänderungen einer Vielzahl von Trainingsfahrzeugen über jeweilige Zeiträume repräsentieren;

ein neuronales Netzwerk zu trainieren, um für jedes Trainingsfahrzeug in Abhängigkeit von einer Reihe von Zuständen des Trainingsfahrzeugs über einen Zeitraum, wie durch die Zustandsinformationen definiert, einen Variantenfaktor (u) zu schätzen, wobei der Variantenfaktor (u) der letzte verborgene Zustand des neuronalen Netzwerks ist und durch wiederholtes Optimieren für eine Verlustfunktion zwischen (i) einem beobachteten Zustand des Trainingsfahrzeugs zu einem gegebenen Zeitpunkt in der realen Welt (302), wie durch die Zustandsinformationen definiert, und (ii) einem imaginierten Zustand des Trainingsfahrzeugs geschätzt wird, wie für den gegebenen Zeitpunkt in einer Traumwelt (304) durch ein erstes Modell in Abhängigkeit von einem Zustand des Trainingsfahrzeugs, wie durch die Zustandsinformationen für einen Zeitpunkt vor dem gegebenen Zeitpunkt definiert, geschätzt wird; und

den Variantenfaktor (u) zu speichern;

und wobei die Einrichtung eine Upload-Vorrichtung umfasst, die dazu konfiguriert ist, den Variantenfaktor (u) in dem Fahrzeug zu speichern;

und wobei

das Fahrzeug einen oder mehrere Sensoren und einen oder mehrere Prozessoren umfasst, die fähig sind, den Variantenfaktor zu implementieren, um in Abhängigkeit von Zustandsinformationen, die durch den einen oder die mehreren Sensoren erfasst werden, die den Zustand einer Vielzahl von Fahrzeugen repräsentieren, zukünftige Zustände der Fahrzeuge vorherzusagen.

2.  System nach Anspruch 1, wobei das neuronale Netzwerk ein rekurrentes neuronales Netzwerk ist, das eine Gated Recurrent Unit ($f_\phi$) für jede Reihe von Zuständen ( $s_k^{0:T}$ ) jedes Trainingsfahrzeugs (k) aufweist, und die Einrichtung dazu konfiguriert ist, den letzten verborgenen Zustand ( $h_k^T = f_\phi(s_k^{0:T})$ ) des neuronalen Netzwerks als den Variantenfaktor für jenes Trainingsfahrzeug zu übernehmen.

3.  System nach Anspruch 1 oder 2, wobei die Einrichtung dazu konfiguriert ist, das neuronale Netzwerk als ein Graph Neural Network zu implementieren, das dazu konfiguriert ist, für eine Reihe von anfänglichen Fahrzeugzuständen ( $s_{1:K}^t$ ) für jedes aus einem Satz von Fahrzeugen zu einem gegebenen Zeitpunkt (t) eine Reihe von zukünftigen Zuständen ( $\triangle s_{1:K}^t$ ) für jedes aus dem Satz von Fahrzeugen vorherzusagen.

4.  System nach einem der vorhergehenden Ansprüche, wobei die Verlustfunktion so definiert ist, dass sie positive und negative Samples unterschiedlich bewertet.

5.  System nach Anspruch 4, wobei die Verlustfunktion so definiert ist, dass der Verlust ( $\mathcal{L}$ ) konsistent mit $\mathcal{L} = \mathcal{H} + \max(0, \gamma - \tilde{\mathcal{H}})$ berechnet wird, wobei $\gamma$ ein Hyperparameter ist, $\mathcal{H}$ eine Energie ist, die zwei aufeinanderfolgenden Zuständen entspricht, und $\tilde{\mathcal{H}}$ eine Energie ist, die einem negativen Sample entspricht.

6.  System nach einem der vorhergehenden Ansprüche, wobei der oder jeder Prozessor dazu konfiguriert ist:

weitere Zustandsinformationen (reale Welt / $o$) zu empfangen, die den Zustand einer Vielzahl von Live-Fahrzeugen repräsentieren; und

zukünftige Zustände (Traumwelt/$f_{Trans}(|\bar{s}^t:\hat{u}|)_k)$) der Live-Fahrzeuge in Abhängigkeit von dem ersten Modell und dem Variantenfaktor zu schätzen.

7.  System nach Anspruch 6, wobei der oder jeder Prozessor dazu konfiguriert ist:

eine Zwischenschätzung ($s$) der zukünftigen Zustände mittels des ersten Modells zu bilden; und

die zukünftigen Zustände durch Variieren der Zwischenschätzung in Abhängigkeit von dem Variantenfaktor zu schätzen.

8.  System nach einem der vorhergehenden Ansprüche, wobei der oder jeder Prozessor dazu konfiguriert ist:

Zustandsinformationen zu empfangen, die den Zustand einer Vielzahl von Fahrzeugen repräsentieren;
zukünftige Zustände der Fahrzeuge in Abhängigkeit von dem ersten Modell und dem Variantenfaktor zu schätzen; und
ein weiteres neuronales Netzwerkmodell zu trainieren, um in Abhängigkeit von den empfangenen Zustandsinformationen die geschätzten zukünftigen Zustände der Fahrzeuge vorherzusagen.

9. System nach Anspruch 8, wobei cc.

10. Computerimplementiertes Verfahren für autonomes Fahren eines Fahrzeugs, umfassend Generieren eines prädiktiven Modells einer Umgebung der realen Welt, in der eine Vielzahl von Fahrzeugen den Zustand ändert, wobei das Verfahren umfasst:

Empfangen von Zustandsinformationen, die eine oder mehrere Zustandsänderungen einer Vielzahl von Trainingsfahrzeugen über jeweilige Zeiträume repräsentieren;
Trainieren eines neuronalen Netzwerks, um für jedes Trainingsfahrzeug in Abhängigkeit von einer Reihe von Zuständen des Trainingsfahrzeugs über einen Zeitraum, wie durch die Zustandsinformationen definiert, einen Variantenfaktor (u) zu schätzen, wobei der Variantenfaktor (u) der letzte verborgene Zustand des neuronalen Netzwerks ist, der durch wiederholtes Optimieren für eine Verlustfunktion zwischen (i) einem beobachteten Zustand des Trainingsfahrzeugs zu einem gegebenen Zeitpunkt in der realen Welt (302), wie durch die Zustandsinformationen definiert, und (ii) einem imaginierten Zustand des Trainingsfahrzeugs geschätzt wird, wie für den gegebenen Zeitpunkt in einer Traumwelt (304) durch ein erstes Modell in Abhängigkeit von einem Zustand des Trainingsfahrzeugs, wie durch die Zustandsinformationen für einen Zeitpunkt vor dem gegebenen Zeitpunkt definiert, geschätzt wird;
Speichern des Variantenfaktors (u) in dem Fahrzeug;
Erfassen von Zustandsinformationen durch einen oder mehrere Sensoren des Fahrzeugs;
Implementieren des Variantenfaktors (u) durch einen oder mehrere Prozessoren des Fahrzeugs, um in Abhängigkeit von den Zustandsinformationen, die durch den einen oder die mehreren Sensoren erfasst werden, die den Zustand einer Vielzahl von Fahrzeugen repräsentieren, zukünftige Zustände der Fahrzeuge vorherzusagen.

**Revendications**

1. Système de conduite autonome, comprenant

un véhicule ;
un appareil pour générer un modèle prédictif d'un environnement du monde réel dans lequel une pluralité de véhicules changent d'état, l'appareil comprenant un ou plusieurs processeurs configurés pour :

recevoir des informations d'état représentant un ou plusieurs changements d'état d'une pluralité de véhicules d'entraînement sur des périodes de temps respectives ;
entraîner un réseau neuronal à estimer, pour chaque véhicule d'entraînement, en fonction d'une série d'états du véhicule d'entraînement sur une période de temps telle que définie par les informations d'état, un facteur de variation (u), le facteur de variation (u) étant le dernier état caché du réseau neuronal et estimé en optimisant de manière répétée une fonction de perte entre (i) un état observé du véhicule d'entraînement à un instant donné dans le monde réel (302) tel que défini par les informations d'état et (ii) un état imaginé du véhicule d'entraînement tel qu'estimé pour l'instant donné dans un monde onirique (304) par un premier modèle en fonction d'un état du véhicule d'entraînement tel que défini par les informations d'état pour un instant antérieur à l'instant donné ; et
stocker le facteur de variation (u) ;
et dans lequel l'appareil comprend un dispositif de téléchargement configuré pour stocker le facteur de facteur de variation (u) dans le véhicule ;
et dans lequel
le véhicule comprend un ou plusieurs capteurs et un ou plusieurs processeurs capables de mettre en œuvre le facteur de variation afin de prédire, en fonction d'informations d'état détectées par les un ou plusieurs capteurs représentant l'état d'une pluralité de véhicules, des états futurs des véhicules.

2. Système selon la revendication 1, dans lequel le réseau neuronal est un réseau neuronal récurrent ayant une unité récurrente à portes ($f_\phi$) pour chaque série d'états ( $s_k^{0:T}$ ) de chaque véhicule d'entraînement (k) et l'appareil est configuré pour adopter le dernier état caché ( $h_k^T = f_\phi(s_k^{0:T})$ ) du réseau neuronal comme facteur de variation pour ce véhicule d'entraînement.

3. Système selon la revendication 1 ou 2, dans lequel l'appareil est configuré pour mettre en œuvre le réseau neuronal sous la forme d'un réseau neuronal graphique configuré pour prédire, pour une série d'états de véhicule initiaux ( $s_{1:K}^t$ ) pour chacun d'un ensemble de véhicules à un instant donné ($t$), une série d'états futurs ( $\triangle s_{1:K}^t$ ) pour chacun de l'ensemble de véhicules.

4. Système selon une quelconque revendication précédente, dans lequel la fonction de perte est définie de manière à attribuer un score différent aux échantillons positifs et négatifs.

5. Système selon la revendication 4, dans lequel la fonction de perte est définie de sorte que la perte ( $\mathcal{L}$ ) est calculée de manière cohérente avec $\mathcal{L} = \mathcal{H} + \max(0, \gamma - \widetilde{\mathcal{H}})$, où $\gamma$ est un hyperparamètre, $\mathcal{H}$ est une énergie correspondant à deux états consécutifs et $\widetilde{\mathcal{H}}$ est une énergie correspondant à un échantillon négatif.

6. Système selon une quelconque revendication précédente, dans lequel le ou chaque processeur est configuré pour :

    recevoir des informations d'état supplémentaires (monde réel/ o) représentant l'état d'une pluralité de véhicules en circulation ; et
    estimer des états futurs (monde onirique /$f_{trans}(|\bar{s}^t : \hat{u}|)_k$) des véhicules en circulation en fonction du premier modèle et du facteur de variation.

7. Système selon la revendication 6, dans lequel le ou chaque processeur est configuré pour :

    former une estimation intermédiaire (s) des états futurs au moyen du premier modèle ; et
    estimer les états futurs en faisant varier l'estimation intermédiaire en fonction du facteur de variation.

8. Système selon une quelconque revendication précédente, dans lequel le ou chaque processeur est configuré pour :

    recevoir des informations d'état représentant l'état d'une pluralité de véhicules ;
    estimer des états futurs des véhicules en fonction du premier modèle et du facteur de variation ; et
    entraîner un modèle de réseau neuronal supplémentaire pour prédire, en fonction des informations d'état reçues, les états futurs estimés des véhicules.

9. Système selon la revendication 8, dans lequel cc.

10. Procédé de conduite autonome mis en œuvre par ordinateur d'un véhicule comprenant la génération d'un modèle prédictif d'un environnement du monde réel dans lequel une pluralité de véhicules changent d'état, le procédé comprenant :

    la réception d'informations d'état représentant un ou plusieurs changements d'état d'une pluralité de véhicules d'entraînement sur des périodes de temps respectives ;
    l'entraînement d'un réseau neuronal à estimer, pour chaque véhicule d'entraînement, en fonction d'une série d'états du véhicule d'entraînement sur une période de temps telle que définie par les informations d'état, un facteur de variation (u), le facteur de variation (u) étant le dernier état caché du réseau neuronal estimé en optimisant de manière répétée une fonction de perte entre (i) un état observé du véhicule d'entraînement à un instant donné dans le monde réel (302) tel que défini par les informations d'état et (ii) un état imaginé du véhicule d'entraînement tel qu'estimé pour l'instant donné dans un monde onirique (304) par un premier modèle en fonction d'un état du véhicule d'entraînement tel que défini par les informations d'état pour un instant antérieur à l'instant donné ;
    le stockage du facteur de variation (u) dans le véhicule ;
    la détection d'informations d'état par un ou plusieurs capteurs du véhicule ;
    la mise en œuvre du facteur de variation (u) par un ou plusieurs processeurs du véhicule de manière à prédire, en fonction des informations d'état détectées par les un ou plusieurs capteurs représentant l'état d'une pluralité de véhicules, des états futurs des véhicules.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. BARADEL et al.** CoPhy. Counterfactual Learning of Physical Dynamics. Online Library Cornell University Ithaca, 26 September 2019